# EUROPEAN PATENT SPECIFICATION

(11) **EP 3 820 007 B1**
(45) Date of publication and mention of the grant of the patent: **20.03.2024**
(21) Application number: 20205953.1
(22) Date of filing: 05.11.2020
(51) Int. Cl.: H02H 3/20, G05F 1/56, H02H 9/04

(54) **AN OVERVOLTAGE PROTECTION CIRCUIT AND OVERVOLTAGE PROTECTION METHOD**
ÜBERSPANNUNGSSCHUTZSCHALTUNG UND VERFAHREN
DISPOSITIF ET PROCÉDÉ DE PROTECTION CONTRE LES SURTENSIONS

(30) Priority: 05.11.2019 CN 201911069591
(43) Date of publication of application: 12.05.2021
(73) Proprietor: Valeo Powertrain (Shanghai) Co., Ltd., Shanghai, Jiangsu 200233 (CN)
(72) Inventor: CHENG, Guangxin, Shanghai, Jiangsu 200233 (CN); YANG, Hannah-Min, Shanghai, Jiangsu 200233 (CN); ZHANG, Luna-Xue, Shanghai, Jiangsu 200233 (CN)
(74) Representative: Valeo Powertrain Systems

(56) References cited:
- CN-A- 104 717 772
- KR-B1- 101 424 770
- US-A1- 2010 277 959

## Description

### Technical Field

The present invention relates to the field of electric circuits, specifically, it relates to an overvoltage protection circuit and an overvoltage protection method.

### Prior Art

The voltage of electrical equipment has strict safe working ranges. Looking at the voltage in circuits for example, when the input voltage exceeds a safe working range, devices can be damaged or burned, affecting the normal operation of the equipment. In severe cases harmful accidents may even occur. Thus, generally an overvoltage protection circuit is provided to ensure safety.

For exemple, document CN104717772A describes an overvoltage protection circuit for protecting an induction cooker.

At the same time, with the rapid development of automotive electronic control, automatic transmission control units (TCU) have become one of the core control systems of vehicles with automatic transmission. Automatic TCU's can be used in vehicles to process the various sensor signals describing the current vehicle driving state, determining that the current vehicle gear for the driver and controlling the transmission to shift between the different gears of the vehicle.

The TCU generally includes a control circuit, a detection circuit, and a drive circuit. Each circuit part requires a power supply in order to work normally. General vehicles use a 12V power supply system, while trucks and buses are provided with 24V power supply systems. That is, the TCU generally uses 12V or 24V power supply voltage, then the power supply voltage is used to supply power for each part of the internal circuit or the power supply voltage is converted by the internal power module of the TCU to obtain the voltage required by each part of the internal circuit (such as 3.3V, 5V, etc.). However, during load dumps in the vehicle, large proportional speed changes and braking of the motor will cause peak voltages of up to about 50V as the power input of the TCU. This peak voltage value may damage the internal circuits and internal power modules of the TCU, thereby affecting the performance of the TCU.

### Content of the Invention

An embodiment of the present invention, as defined in the appended independent claim 1, provides an overvoltage protection circuit, including: a π-filter circuit composed of inductors and capacitors, used to filter the input voltage signal to obtain a filtered voltage signal; and an overvoltage protection unit, used for generating the output voltage signal of said overvoltage protection circuit generated based on said filtered voltage signal, and when the voltage of said output voltage signal is greater than or equal to a first threshold, it outputs an adjusted voltage signal different to said filtered voltage signal to serve as the output voltage signal of said overvoltage protection circuit, the voltage of said adjusted voltage signal is less than said first threshold, wherein, said adjusted voltage signal has a sawtooth waveform.

An embodiment of the present invention, as defined in the appended independent claim 7, further provides a method for overvoltage protection, used for the above-mentioned overvoltage protection circuit, including: a π-filter circuit composed of inductors and capacitors filters the input voltage signal to obtain a filtered voltage signal; the overvoltage protection unit generates an output voltage signal of said overvoltage protection circuit based on said filtered voltage signal, and when the voltage of said output voltage signal is greater than or equal to a first threshold, it outputs an adjusted voltage signal different to said filtered voltage signal to serve as the output voltage signal of said overvoltage protection circuit, the voltage of said adjusted voltage signal is less than said first threshold, wherein, said adjusted voltage signal has a sawtooth waveform.

What needs to be understood is that the foregoing general description and the following detailed description are both exemplary, and the intention is to provide further explanation of the claimed technology.

### Description of the Drawings

The embodiments of the present disclosure are described in more detail with reference to the accompanying drawings. The above and other objectives, features and advantages of the present disclosure will become more apparent. The drawings are used to provide a further understanding of the embodiments of the present disclosure, and form part of the specification, used to explain the present disclosure together with the embodiments of the present disclosure, but they do not constitute a limitation of the present disclosure. In the attached drawings, the same reference numerals generally represent the same parts or steps.
Figure 1A shows a schematic circuit diagram of a TCU including an overvoltage protection circuit.
Figure 1B-1C show two schematic circuit diagrams of an overvoltage protection circuit.
Figure 2A shows a schematic circuit diagram of a TCU including an overvoltage protection circuit of an embodiment of the present invention.
Figure 2B shows a schematic circuit diagram of an overvoltage protection circuit based on an embodiment of the present invention.
Figure 3 shows a schematic diagram of the waveforms of various voltage signals when the overvoltage protection circuit according to an embodiment of the present disclosure works.
Figure 4 shows a flowchart including an overvoltage protection method according to an embodiment of the present invention.

### Specific Embodiments

The following will combine with the drawings in the embodiments of the present disclosure; the technical solutions in the embodiments of the present disclosure are described clearly and completely. Obviously, the described embodiments are only part of the embodiments of the present disclosure, but they are not all embodiments. Based on the embodiments in this disclosure, all other embodiments that may be obtained by those of ordinary skill in the art without creative labour all belong to the scope of protection of this disclosure.

For the aforementioned high peak voltage at the power input of said TCU, a common solution is to add an overvoltage protection unit before the power input of each part of the internal circuit (when the TCU does not have an internal power module) or the input of the internal power module (when the TCU has an internal power module), so as to keep the corresponding input voltage within a safe range.

At the same time, in order to make the TCU (especially a TCU including an internal power module) pass electromagnetic compatibility testing, usually, it is necessary to install a filter circuit composed of inductors and capacitors in each part of the internal circuit or internal power module.

For ease of description and a better understanding of this disclosure, this article describes in detail the overvoltage protection circuit inside the TCU. However, those skilled in the art will understand that the application of overvoltage protection circuit should not be limited to a TCU, and other applications are also possible. For example, it can be used for general electrical equipment.

In addition, this article takes the case where the TCU includes an internal power supply module as an example. However, those skilled in the art will also understand that the situation is similar when the TCU does not have an internal power supply module (that is, the voltage at the power input end of the TCU directly supplies power to the control circuit and detection circuit in the TCU). Only the internal voltage conversion is missing, but this disclosure does not limit this.

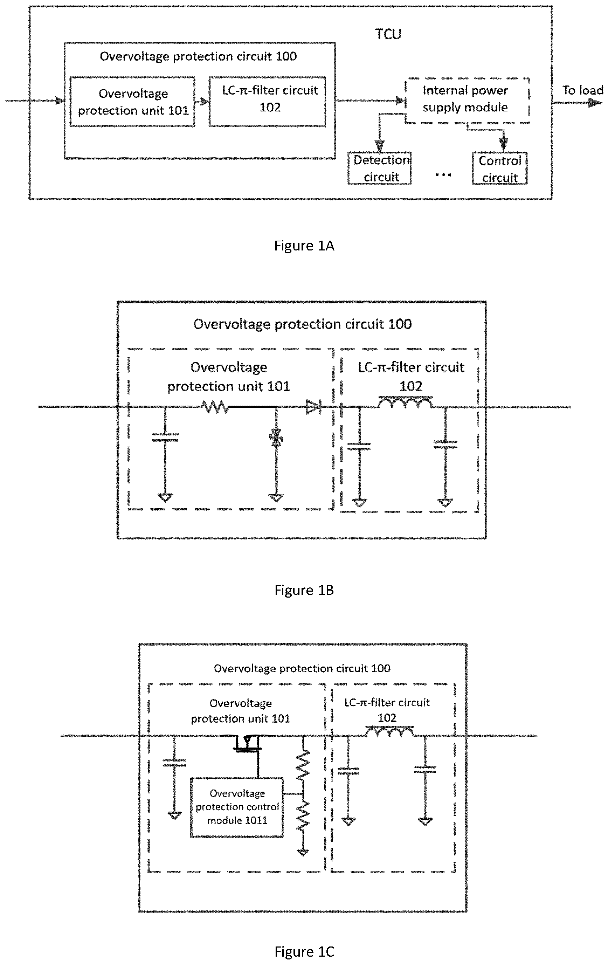

Figure 1A shows a schematic circuit diagram of a TCU including an overvoltage protection circuit. Figure 1B-1C show two example circuit diagrams of the overvoltage protection circuit in a TCU shown in Figure 1A.

As shown in Figure 1A, according to the previous article, in order to ensure the input voltage of each part of the circuit in the TCU (for example, the control circuit, detection circuit and drive circuit, etc.) or to ensure that the input voltage of the internal power module of the TCU remains within a safe range and meets electromagnetic compatibility requirements, an overvoltage protection circuit 100 is provided in front of each part of the circuit in the TCU or the internal power supply module of the TCU, the overvoltage protection circuit 100 includes an overvoltage protection unit 101 and a π-filter circuit 102 composed of inductors and capacitors (hereinafter referred to as the LC-π-filter circuit).

It is worth noting that although Figure 1A shows the overvoltage protection circuit 100 located inside the TCU, according to the specific situation, the overvoltage protection circuit 100 can also be located outside the TCU.

Normally, the overvoltage protection unit 101 can use a Zener diode for overvoltage protection, as shown in Figure 1B, by choosing the Zener diode of the appropriate specification, the high voltage appearing at the power input terminal of the TCU can be stabilized to its regulated value and provided to the input terminal of the internal power module of the TCU. However, the efficiency of Zener diodes is low, and they generate a large amount of heat.

Thus, an overvoltage protection unit 101 based on an overvoltage protection control integrated circuit (IC) is also provided as shown in Figure 1C, the overvoltage protection unit 101 includes a switching transistor Q and an overvoltage protection control module 1011 (the control module includes a control integrated circuit IC). When the voltage value of the TCU input voltage signal at the power input terminal is within the normal range, the overvoltage protection control integrated circuit IC controls the switching transistor Q to remain conductive, the overvoltage protection circuit directly outputs the input voltage signal of the power supply input terminal to the LC-π-filter circuit, then this is provided to the internal power module of the TCU, and when overvoltage is detected at the power input terminal of the TCU, the overvoltage protection control integrated circuit IC controls the switching transistor Q to become conductive and disconnected intermittently, similar to a voltage regulator. Thus, the voltage of the signal provided to the internal power supply module of the TCU through the LC-π-filter circuit is within the normal range.

However, when the overvoltage protection control integrated circuit IC controls the switching transistor Q to switch between the conductive and disconnected states, that is, when the switching transistor Q is made conductive and disconnected intermittently, since the first terminal of the switching transistor Q is connected to the input terminal of the overvoltage protection unit, the second terminal is connected to the output terminal of the overvoltage protection unit, that is, the input terminal of the LC-π-filter circuit; when the switching transistor Q is turned off, the input current signal of the LC-filter circuit will be zero, continuing until the switch is made conductive again, that is, the input current signal of the LC-π filter circuit will be discontinuous. This will cause the inductor and capacitor in the LC-π-filter circuit 102 as shown in the figure to form an LC oscillation loop, thus, an oscillating voltage signal will be generated on the output terminal of the overvoltage protection circuit 100. If the peak value of the oscillating voltage signal is higher than the maximum input voltage allowed by the internal power supply module of the TCU, the internal power module connected to the output terminal may be damaged, and the TCU will not be able to work normally. Thus, the use of the overvoltage protection unit of this circuit structure as shown in Figure 1C is limited.

Thus, the present invention provides an improved overvoltage protection circuit which can ensure that even if the input voltage of the signal input from the power supply (for example, the battery) to the power input terminal of the electric device (for example the TCU) is abnormally high (for example, an overvoltage appears at the power input terminal of the TCU during a load dump), the electrical apparatus can function normally, for example, the internal power module of the TCU can still work normally.

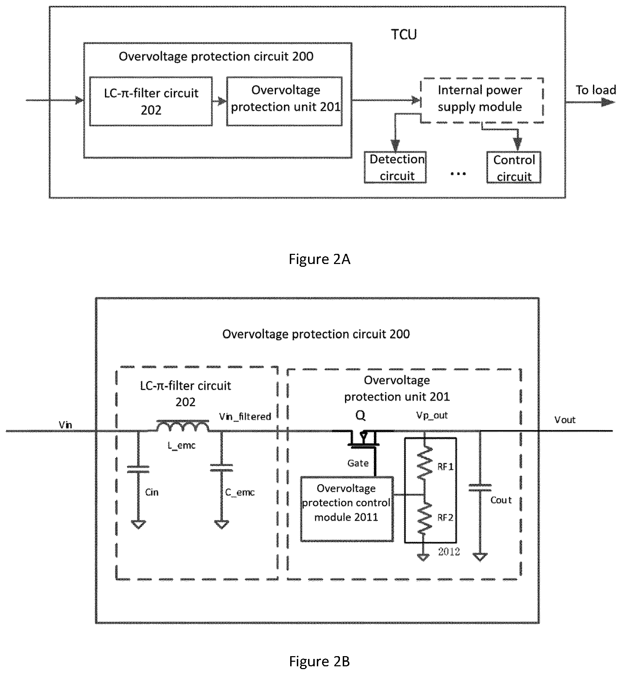

Figure 2A shows a schematic circuit diagram of a TCU including an overvoltage protection circuit of an embodiment of the present invention. Figure 2B shows a schematic circuit diagram of an overvoltage protection circuit based on an embodiment of the present invention.

As shown in Figure 2A, the LC-π-filter circuit 202 is arranged in front of the overvoltage protection unit 201. The LC-π-filter circuit 202 is used to filter the input voltage signal to obtain a filtered voltage signal. The input terminal of the overvoltage protection unit 201 is connected to the output terminal of the LC-π-filter circuit, used to output the filtered voltage signal to serve as the output voltage signal of the overvoltage protection circuit or to adjust the filtered voltage signal to obtain an adjusted voltage signal as the output voltage signal of the overvoltage protection circuit, and to provide the output voltage signal to the internal power supply module of the TCU.

In addition, when the overvoltage protection unit 201 adjusts the filtered voltage signal, the LC-π-filter circuit 202 supply of current to the overvoltage protection unit 201 is discontinuous, so an adjusted voltage signal with a sawtooth waveform is obtained. The specific process for this will be described in detail later.

More specifically, Figure 2B shows a further schematic circuit diagram of an overvoltage protection circuit 200 of an embodiment of the present invention.

As shown in Figure 2B, the LC-π-filter circuit 202 includes an inductor and two capacitors that are connected in a π-shape. The LC-π-filter circuit 202 receives the input voltage signal Vin from the power supply, and can filter the input voltage signal Vin to obtain the filtered voltage signal Vin_filtered.

The input terminal of the overvoltage protection unit 201 receives the filtered voltage signal Vin_filtered, and generates an output voltage signal Vout of the overvoltage protection circuit based on the filtered voltage signal Vin_filtered.

Going a step further, when the voltage Vout of the detected output voltage signal is maintained at less than a first threshold, the overvoltage protection unit 201 directly uses the filtered voltage signal Vin_filtered as the output voltage signal Vout of the overvoltage protection circuit 300, and when it detects that the voltage value of the output voltage signal Vout is greater than or equal to a first threshold, the overvoltage protection unit 201 outputs an adjustment voltage signal Vp_out different from the filtered voltage signal as the output voltage signal Vout of the overvoltage protection circuit, wherein the voltage value of the adjusted voltage signal Vp_out is smaller than the first threshold and has a sawtooth waveform.

Optionally, maintaining the voltage of the output voltage signal Vout at less than the first threshold value may mean that the voltage of the output voltage signal Vout is less than a first threshold value within a predetermined time.

Optionally, the first threshold may be set according to the maximum input voltage allowed by the internal power supply module in the TCU unit.

The structure of the overvoltage protection unit 201 will be described in detail below.

The overvoltage protection unit includes a switching transistor Q and an output capacitor Cout, the first terminal of the switching transistor Q connects to the input terminal of the overvoltage protection unit 201, so as to receive the filtered voltage signal Vin_filtered, and the second terminal of switching transistor Q connects to the output terminal of the overvoltage protection unit 201 so when the voltage of the output voltage signal Vout is maintained at less than a first threshold, the voltage of the output filtered voltage signal Vin_filtered or output voltage signal Vout is greater than or equal to the first threshold, the adjusted voltage signal Vp_out is output; one terminal of output capacitor Cout connects to the second terminal of switching transistor Q, the other terminal of said output capacitor Cout is grounded.

The switching transistor remains conductive when the voltage of the output voltage signal Vout remains less than the first threshold value, and intermittently becomes conductive and disconnected when the voltage of the output voltage signal Vout is greater than or equal to the first threshold. In addition, since the first terminal of the switching transistor Q is connected to the input terminal of the overvoltage protection unit, that is, the output terminal of the LC-π-filter circuit, the second terminal is connected to the output terminal of the overvoltage protection unit; when the switching transistor Q is turned off, the value of the output current signal from the LC-π-filter circuit to the overvoltage protection unit will be zero, continuing until the switching transistor is made conductive again, that is, the output current signal from the LC-π-filter circuit to the overvoltage protection unit will discontinuous. Therefore, the output capacitor Cout repeats the charging and discharging process as the switching transistor Q is made conductive and disconnected intermittently, so that said adjusted voltage signal Vp_out has a sawtooth waveform.

Optionally, the overvoltage protection unit 201 further includes an overvoltage protection control module 2011, and the overvoltage protection control module 2011 may be an overvoltage protection control integrated circuit IC. The control terminal of said switching transistor Q connects to said overvoltage protection control module 2011, and overvoltage protection control module 2011 is configured to: when the voltage Vout of the output voltage signal is maintained at less than a first threshold, the overvoltage protection control module operates in normal mode, so as to output an effective level control signal to the control terminal of switching transistor Q so as to maintain the conductive status of the switching transistor; and when the voltage Vout of the output voltage signal is maintained greater than or equal to a first threshold, operate in overvoltage protection mode, the overvoltage protection control module outputs an intermittent effective level control terminal to the control terminal of the switching transistor Q so as to intermittently make the switching transistor conductive and disconnected.

Optionally, the overvoltage protection unit 201 further includes a voltage detection circuit 2012, one terminal of said voltage detection circuit 2012 connects to the output terminal of the overvoltage protection unit 201, the other terminal of the voltage detection circuit 2012 is grounded, used for detecting the voltage of the output voltage signal Vout. The voltage detection circuit 2012 provides a voltage detection signal to the overvoltage protection control module 2011, and when the value of the voltage detection signal is greater than or equal to a first voltage detection threshold corresponding to the first threshold, the overvoltage protection control module enters the overvoltage protection mode, and controls the switching transistor to turn off until the value until the voltage detection signal drops to a predetermined ratio of the first voltage detection threshold, then controls the switching transistor to again become conductive until the value of the voltage detection signal is again greater than or equal to the corresponding first voltage detection threshold of the first threshold.

Optionally, an example of the voltage detection circuit 2012 includes a resistor divider circuit composed of resistors RF1 and RF2 in series; the ratio of the first voltage detection threshold to the first threshold is determined by the resistance values of RF1 and RF2.

Going a step further, when the overvoltage protection control module 2011 operates in normal mode, as an example and not a limitation, the control signal of the effective level output by the overvoltage protection control module 2011 to the control terminal of the switching transistor Q can make the switching transistor Q fully conductive. When the overvoltage protection control module operates in overvoltage mode 2011, the switching transistor Q needs to be switched from disconnected to conductive, in order to prevent the output capacitor Cout from being quickly charged to reach the first threshold again, an alternative method is that the overvoltage protection control module 2011 controls the switching transistor Q to be in an incompletely conductive state. For example, the overvoltage protection control module 2011 outputs the intermittent effective level control signal to the control terminal of the switching transistor Q in overvoltage protection control mode. The level of each effective level control signal acting on the control terminal of the switching transistor gradually increases, so that the voltage at the control terminal of the switching transistor Q gradually increases from a voltage value that makes the switching transistor work in an incompletely conductive state, therefore, the switching transistor Q remains incompletely conductive for a period of time, this ensures safe overvoltage protection. As the level of the control terminal of the switching transistor gradually increases, when it is detected that the voltage value of the output voltage signal again reaches the first threshold, the overvoltage protection control module 2011 turns off the switching transistor by outputting a control signal of an invalid level, then, when it is detected that the value of the output voltage signal Vout has fallen to a predetermined proportion of the first threshold value, the overvoltage protection control module 2011 again makes the switching transistor Q conductive by acting on the level of the control terminal of the switching transistor via a control signal of the effective level, that is, at this time, the switch is controlled according to the gradually increasing voltage at the control terminal of the switching transistor gradually making the switching transistor Q conductive.

At the same time, in the case that the level of a certain effective level of the control signal applied to the control terminal of the switching transistor gradually increases to make the switching transistor completely conductive and it is detected that the voltage of the output voltage signal remains less than the first threshold, this shows that at this time, the filtered voltage signal Vin_filtered is used as the output voltage signal Vout, and the voltage of the filtered voltage signal Vin_filtered has been kept smaller than the first threshold, so the overvoltage protection control module 2011 has switched back to normal mode.

In addition, by using the overvoltage protection circuit shown in Figure 2B, as analysed above, when the overvoltage protection control module 2011 operates in overvoltage mode, the switching transistor is made conductive and disconnected intermittently, when the switching transistor Q is turned off, the LC-π-filter circuit does not supply current to the overvoltage protection, the inductance and capacitance inside the LC-π-filter circuit will form an oscillation loop, at this time, the voltage of the filtered voltage signal Vin_filtered will also appear as a voltage spike due to LC oscillation. But at this time, the filtered voltage signal Vin_filtered with the voltage spike is only applied to the first terminal of the switching transistor Q, therefore it is only necessary to select the appropriate specifications of the switching transistor (for example, selecting a metal oxide semiconductor field effect transistor for which the maximum voltage it can withstand between the drain and source is greater than or equal to the voltage of the voltage spike), and the internal circuits of the overvoltage protection circuit (for example, switching transistors, overvoltage protection control modules, and voltage detection circuits) and subsequent circuits of the overvoltage protection circuit (for example, the internal power supply module of the TCU or directly connected control circuits or detection circuits, etc.) experience no overvoltage, thereby the subsequent circuits are provided with a voltage within the normal range that can ensure normal operation, and it is still possible to choose the subsequent circuits with lower input voltage even in the case of high input voltage, increasing the safety, adaptability and reliability of the overvoltage protection circuit.

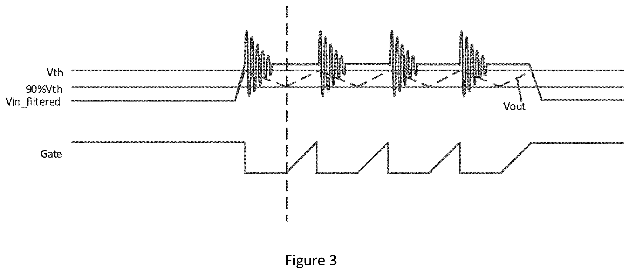

The working principle of the overvoltage protection circuit shown in Figure 2 will be further described below with reference to the waveform diagram of the voltage signal in Figure 3.

As shown in Figure 2 and Figure 3, when the input voltage signal Vin is within the normal range, the highest value of the normal range is generally equal to the first threshold, and the voltage detected by the voltage detection circuit at the output terminal of the overvoltage protection circuit is also less than the first voltage detection threshold corresponding to the first threshold, it can be determined that the voltage of the filtered voltage signal Vin_filtered at this time is also within the normal range (remains less than the first threshold Vth), and the overvoltage protection control module in the overvoltage protection unit 201 works in normal mode, so as to output an effective level control signal to switching transistor Q to maintain the conductive status of the switching transistor Q, so as to continue to directly output the filtered voltage signal Vin_filtered, serving as the output voltage signal of the overvoltage protection circuit, and the circuit has good electromagnetic compatibility performance.

When the input voltage signal Vin is greater than or equal to the maximum value of the normal range, the voltage detected by the voltage detection circuit at the output terminal of the overvoltage protection circuit is also greater than or equal to the first voltage detection threshold corresponding to the first threshold, it can be determined that the voltage value of the filtered voltage signal Vin_filtered at this time is also beyond the normal range (greater than or equal to the first threshold Vth), and at this time, the overvoltage protection control module in the overvoltage protection unit 201 outputs an invalid level control signal to control the switching transistor Q to shut down. After the switching transistor is turned off, the output capacitor Cout starts to discharge so that the voltage on the output capacitor (that is, the voltage value of the output voltage signal Vout) starts to decrease.

When the voltage on the output capacitor Cout drops to a certain level (for example, 90% Vth), the overvoltage protection control module in the overvoltage protection unit 201 re-outputs an effective level control signal to drive the switching transistor to become conductive, in order to use the filtered voltage signal Vin_filtered to recharge the output capacitor Cout. As a result, the voltage on the output capacitor (that is, the voltage of the output voltage signal Vout) gradually rises. As analysed above, in overvoltage protection mode, the effective level of the control signal output by the overvoltage protection control module acts on the level of control terminal at the switch tube to gradually increase, and at this time, the switching transistor is not directly completely conductive.

When voltage on the output capacitor Cout again increases to the first threshold, the overvoltage protection control module in overvoltage protection unit 201 turns off the switching transistor Q again by outputting a control signal of an invalid level so as to stop charging the output capacitor Cout, so that the voltage on the output capacitor Cout again begins to gradually increase.

When voltage on the output capacitor Cout again falls to a predetermined proportion of the first threshold (for example, 90%), the overvoltage protection control module in the overvoltage protection unit 201 causes the switching transistor to start to become conductive again by outputting a control signal of an effective level, and the turned on transistor is not fully conductive at this time, and it starts again charging the output capacitor, so that the voltage on the output capacitor gradually increases. The above process is repeated until the gradually increasing level at the control terminal of the switching transistor has made the switching transistor fully conductive, and at this time it is detected that the voltage value on the output capacitor remains less than the first threshold, the transistor remains fully conductive, thus, the filtered voltage signal Vin_filtered is directly output as the output voltage signal of the overvoltage protection circuit.

It should be understood that, Although the waveform diagram of Figure 3 shows that the effective level of the control signal acts on the control terminal of the switching transistor to increase linearly, other implementations are also feasible, the implementation only needs to satisfy the condition wherein a control signal can gradually change the switching transistor from the non-fully conductive state to the fully conductive state.

When the overvoltage protection control module in the overvoltage protection unit works in overvoltage protection mode, where the switching transistor is made conductive and disconnected intermittently, when the switching transistor is turned off, the LC of the LC-π-filter circuit will form an oscillation loop, at this time, the voltage of the filtered voltage signal Vin_filtered will also appear as a voltage spike due to LC oscillation. However, the voltage spike is interrupted by the switching transistor with appropriate specifications (for example, a metal oxide semiconductor field effect transistor with a maximum voltage that can be withstood between a suitable drain and source), and will not be transmitted to the output voltage signal Vout, as shown in Figure 3.

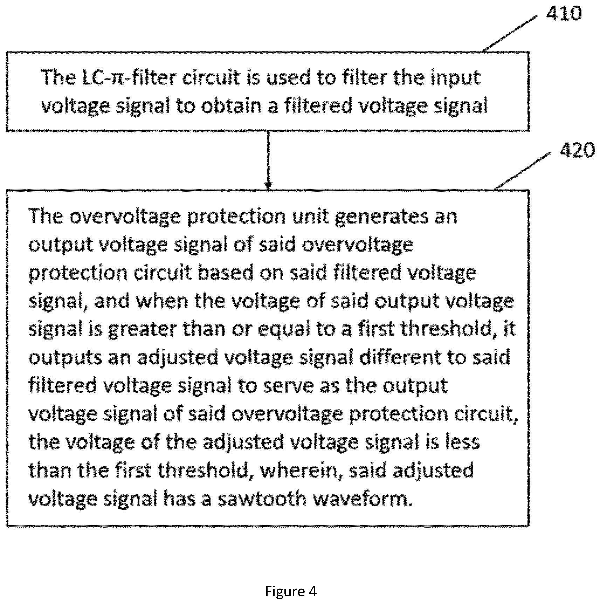

According to another aspect of the present disclosure, an overvoltage protection method based on the above-mentioned overvoltage protection circuit is also proposed. Figure 4 shows an overvoltage protection method according to an embodiment of the present invention.

In step 410, the LC-π-filter circuit filters the input voltage signal to obtain a filtered voltage signal.

In step 420, the overvoltage protection unit generates an output voltage signal of the overvoltage protection circuit based on the filtered voltage signal, and when the voltage of the output voltage signal is greater than or equal to a first threshold, it outputs an adjusted voltage signal different to the filtered voltage signal to serve as the output voltage signal of the overvoltage protection circuit, the voltage of the adjusted voltage signal is less than the first threshold, wherein, the adjusted voltage signal has a sawtooth waveform.

Optionally, the above step 420 includes: control the switching transistor to remain conductive when the voltage of the output voltage signal remains less than a first threshold; and to intermittently become conductive and disconnected when the voltage of the output voltage signal is greater than or equal to the first threshold, and wherein, when the switching transistor is made conductive and disconnected intermittently, the output capacitor, repeats a charging and discharging process, so that the adjusted voltage signal has a sawtooth waveform.

Optionally, the above step 420 includes: when the voltage of the output voltage signal is maintained at less than a first threshold, causing the overvoltage protection module to operate in normal mode, so as to output an effective level control signal to the control terminal of switching transistor so as to maintain the conductive status of the switching transistor, and when the voltage of the output voltage signal is greater than or equal to a first threshold, causing said overvoltage protection module to operate in overvoltage protection mode, the overvoltage protection control module outputs an intermittent effective level control terminal to the control terminal of the switching transistor so as to intermittently make the switching transistor conductive and disconnected. Wherein, the action of each effective level control signal of the intermittent effective level control signals on the control terminal of the switching transistor gradually increases.

Optionally, the above step 420 includes: causing the voltage detection circuit to provide a voltage detection signal to the overvoltage protection control module, and when the value of the voltage detection signal is greater than or equal to a first voltage detection threshold corresponding to the first threshold, the overvoltage protection control module that has entered overvoltage protection mode controls the switching transistor to be turned off until the value of the voltage detection signal drops to a predetermined ratio of the first voltage detection threshold, then it controls the switching transistor to again become conductive until the value of the voltage detection signal is again greater than or equal to the corresponding first voltage detection threshold of the first threshold, wherein, the switching transistor is controlled to be conductive based on the gradually increasing signal at the control terminal of the switching transistor.

Optionally, the above step 420 includes: when the overvoltage protection module operates in overvoltage protection mode, and when the switching transistor is fully conductive and the voltage of the output voltage signal is maintained at less than a first threshold, the overvoltage protection module switches to operate in normal mode.

Based on this method for overvoltage protection, by placing the LC-π-filter circuit in front of the overvoltage protection unit, even when the overvoltage protection control module in the overvoltage protection unit works in overvoltage protection mode, when the switching transistor is make conductive and disconnected intermittently causing the LC-π-filter circuit to generate a voltage spike due to LC oscillation, it can also isolate voltage spikes at the first terminal (input terminal) of the switching transistor, therefore, neither the internal circuit of the overvoltage protection circuit itself nor the subsequent circuits of the overvoltage protection circuit will experience any overvoltage. Thereby the subsequent circuit is provided with a voltage within the normal range that can ensure normal operation, and it is still possible to choose the subsequent circuits with lower input voltage even in the case of high input voltage, increasing the safety, adaptability and reliability of the overvoltage protection circuit.

Although the subject matter has been described in detail through various specific example embodiments, each embodiment is provided by way of explanation rather than as a limitation of this disclosure. Those skilled in the art will understand that, after understanding the above content, adjustments, changes and equivalents of such embodiments can be easily made. Thus, the present invention does not exclude the inclusion of such modifications, changes and/or additions to the subject matter that will be obvious to those of ordinary skill in the art. For example, features illustrated or described as part of one embodiment can be used with another embodiment, to produce yet another embodiment. Thus, it is intended that this disclosure covers such alterations, changes, and equivalents.

Specifically, although the drawings of the present disclosure respectively describe steps executed in a specific order for the purposes of illustration and discussion, the method of the present disclosure is not limited to the specific illustrated order or arrangement. Without departing from the scope of this disclosure, the various steps of the above method can be omitted, rearranged, combined and/or adjusted in various ways.

Unless otherwise defined, all terms (including technical and scientific terms) used herein have the same meaning as that commonly understood by those of ordinary skill in the art to which this disclosure belongs. It should also be understood that terms such as those defined in ordinary dictionaries should be interpreted as having meanings consistent with their meanings in the context of related technologies, rather than using idealized or extremely formal meanings for explanations, unless explicitly defined as such here.

The above is an explanation of this disclosure, and should not be considered as a restriction. Although several exemplary embodiments of the present disclosure have been described, those skilled in the art will understand that many modifications can be made to the exemplary embodiments without departing from the novel teachings and advantages of the present disclosure. Thus, all of these modifications are intended to be included in the scope of the present disclosure defined by the claims. It should also be understood that the above is an explanation of this disclosure; it should not be considered as limiting the specific embodiments disclosed, Furthermore, modifications to the disclosed embodiments and other embodiments are intended to be included in the scope of the appended claims.

### Drawings

### Overvoltage protection circuit 100

Overvoltage protection unit 101
LC-π-filter circuit 102
Detection circuit
Control circuit
Figure 1A
Overvoltage protection circuit 100
Overvoltage protection unit 101
LC-π-filter circuit 102
Figure 1B
Overvoltage protection circuit 100
Overvoltage protection unit 101
LC-π-filter circuit 102
Overvoltage protection
Control module 1011
Figure 1C
To load
Figure 2A
Figure 2B
Vth
Gate
90% Vth Vin_filtered
Figure 3

The LC-π-filter circuit is used to filter the input voltage signal to obtain a filtered voltage signal
the overvoltage protection unit generates an output voltage signal of said overvoltage protection circuit based on said filtered voltage signal, and when the voltage of said output voltage signal is greater than or equal to a first threshold, it outputs an adjusted voltage signal different to said filtered voltage signal to serve as the output voltage signal of said overvoltage protection circuit, the voltage of the adjusted voltage signal is less than the first threshold, wherein, said adjusted voltage signal has a sawtooth waveform.
Figure 4

## Claims

1. An overvoltage protection circuit (100), including:
an overvoltage protection unit (101), used for generating an output voltage signal (Vout) of said overvoltage protection circuit generated based on a filtered voltage signal, and when the voltage of said output voltage signal is greater than or equal to a first threshold (Vth), it outputs an adjusted voltage signal different to said filtered voltage signal to serve as the output voltage signal of said overvoltage protection circuit, the voltage of said adjusted voltage signal is less than said first threshold,
wherein, said adjusted voltage signal has a sawtooth waveform,
**characterised in that** said overvoltage protection circuit further including a π-filter circuit (202) composed of inductors and capacitors, used to filter the input voltage signal to obtain said filtered voltage signal.

2. The overvoltage protection circuit according to Claim 1, wherein, said overvoltage protection unit includes a switching transistor (Q) and an output capacitor (Cout), a first terminal of said switching transistor is connected to the input terminal of said overvoltage protection unit so as to receive said filtered voltage signal, a second terminal of said switching transistor is connected to the output terminal of said overvoltage protection unit so as to output the filtered voltage signal or the adjusted voltage signal, one terminal of said output capacitor is connected to the second terminal of said switching transistor, the other terminal of said output capacitor is grounded,
wherein, said switching transistor remains conductive when the voltage of the output voltage signal remains less than the first threshold; and intermittently becomes conductive and disconnected when the voltage of the output voltage signal is greater than or equal to the first threshold,
wherein, when said switching transistor is conductive and disconnected intermittently, said output capacitor repeats a charging and discharging process, so that said adjusted voltage signal has a sawtooth waveform.

3. The overvoltage protection circuit according to Claim 2, wherein, said overvoltage protection unit further includes an overvoltage protection control module (2011), the control terminal of said switching transistor connects to said overvoltage protection control module, and said overvoltage protection control module is configured to:
when the voltage of said output voltage signal is maintained at less than the first threshold, the overvoltage protection control module operates in normal mode, outputting an effective level control signal to the control terminal of said switching transistor so as to maintain the conductive status of said switching transistor,
when the voltage of said output voltage signal is greater than or equal to the first threshold, under the operation of the overvoltage protection module, the overvoltage protection control module outputs an intermittent effective level control signal to the control terminal of said switching transistor so as to intermittently make the switching transistor conductive and disconnected.

4. The overvoltage protection circuit according to Claim 3, wherein, the action of each effective level control signal of the intermittent effective level control signals on the control terminal of said switching transistor gradually increases.

5. The overvoltage protection circuit according to Claim 4, wherein, said overvoltage protection unit further includes a voltage detection circuit (2012), one terminal of said voltage detection circuit connects
to the output terminal of said overvoltage protection unit, and the other terminal of said voltage detection circuit is grounded,
wherein, the voltage detection circuit provides a voltage detection signal to said overvoltage protection control module, and when the value of the voltage detection signal is greater than or equal to a first voltage detection threshold corresponding to said first threshold, said overvoltage protection control module enters overvoltage protection mode, and controls the switching transistor to turn off until the value of the voltage detection signal drops to a predetermined ratio of said first voltage detection threshold, then controls the switching transistor to again become conductive until the value of the voltage detection signal is again greater than or equal to the corresponding first voltage detection threshold of said first threshold, wherein, the switching transistor is controlled to be conductive based on the gradually increasing voltage at the control terminal of the switching transistor.

6. The overvoltage protection circuit according to Claim 5, wherein, said overvoltage protection control module is further configured to:
while operating in overvoltage protection mode, when said switching transistor is fully conductive and the voltage of the output voltage signal is maintained at less than the first threshold, switch to normal mode.

7. A method for overvoltage protection, applying the overvoltage protection circuit according to any of Claims 1 to 6: including:
a π-filter circuit (202) composed of inductors and capacitors filters the input voltage signal to obtain a filtered voltage signal;
an overvoltage protection unit (201) generates an output voltage signal (Vout) of said overvoltage protection circuit based on said filtered voltage signal, and when the voltage of said output voltage signal is greater than or equal to a first threshold (Vth), it outputs an adjusted voltage signal different to said filtered voltage signal to serve as the output voltage signal of said overvoltage protection circuit, the voltage of said adjusted voltage signal is less than said first threshold,
wherein, said adjusted voltage signal has a sawtooth waveform.

8. The method according to Claim 7, wherein said overvoltage protection unit includes a switching transistor (Q) and an output capacitor (Cout), a first terminal of said switching transistor is connected to the input terminal of said overvoltage protection unit so as to receive said filtered voltage signal, a second terminal of said switching transistor is connected to the output terminal of said overvoltage protection unit so as to output the filtered voltage signal or the adjusted voltage signal, one terminal of said output capacitor is connected to the second terminal of said switching transistor, the other terminal of said output capacitor is grounded,
wherein, the overvoltage protection unit generates an output voltage signal of said overvoltage protection circuit based on said filtered voltage signal, and when the voltage of said output voltage signal is greater than or equal to the first threshold, it outputs an adjusted voltage signal different to said filtered voltage signal to serve as the output voltage signal of said overvoltage protection circuit, including:
controlling said switching transistor to remain conductive when the voltage of the output voltage signal remains less than the first threshold; and to intermittently become conductive and disconnected when the voltage of the output voltage signal is greater than or equal to the first threshold, and wherein, when said switching transistor is made conductive and disconnected intermittently, said output capacitor repeats a charging and discharging process, so that said adjusted voltage signal has a sawtooth waveform.

9. The method according to Claim 8, wherein said overvoltage protection unit further includes an overvoltage protection control module (2011), the control terminal of said switching transistor connects to said overvoltage protection control module,
wherein, the overvoltage protection unit generates an output voltage signal of said overvoltage protection circuit based on said filtered voltage signal, and when the voltage of said output voltage signal is greater than or equal to the first threshold, it outputs an adjusted voltage signal different to said filtered voltage signal to serve as the output voltage signal of said overvoltage protection circuit, further including:
when the voltage of said output voltage signal is maintained at less than the first threshold, causing said overvoltage protection module to operate in normal mode, so as to output an effective level control signal to the control terminal of said switching transistor so as to maintain the conductive status of said switching transistor,
when the voltage of said output voltage signal is greater than or equal to the first threshold, said overvoltage protection module operates in overvoltage protection mode, so the overvoltage protection control module outputs an intermittent effective level control signal to the control terminal of said switching transistor so as to intermittently make the switching transistor conductive and disconnected.

10. The method according to Claim 9, wherein the action of each effective level control signal of said intermittent effective level control signals on the control terminal of said switching transistor gradually increases.

11. The method according to Claim 10, wherein, said overvoltage protection unit includes a voltage detection circuit (2012), one terminal of said voltage detection circuit connects to said output terminal of said overvoltage protection unit, the other terminal of said voltage detection circuit is grounded,
wherein, the overvoltage protection unit generates an output voltage signal of said overvoltage protection circuit based on said filtered voltage signal, and when the voltage of said output voltage signal is greater than or equal to the first threshold, it outputs an adjusted voltage signal different to said filtered voltage signal to serve as the output voltage signal of said overvoltage protection circuit, further including:
causing said voltage detection circuit to provide a voltage detection signal to said overvoltage protection control module, and when the value of the voltage detection signal is greater than or equal to a first voltage detection threshold corresponding to said first threshold, the overvoltage protection control module that has entered overvoltage protection mode controls the switching transistor to be turned off until the value of the voltage detection signal drops to a predetermined ratio of the first voltage detection threshold, then controlling the switching transistor to again become conductive until the value of the voltage detection signal is again greater than or equal to the corresponding first voltage detection threshold of said first threshold, wherein, the switching transistor is controlled to be conductive based on the gradually increasing voltage at the control terminal of the switching transistor.

12. The method according to Claim 11, wherein, the overvoltage protection unit generates an output voltage signal of said overvoltage protection circuit based on said filtered voltage signal, and when the voltage of said output voltage signal is greater than or equal to the first threshold, it outputs an adjusted voltage signal different to said filtered voltage signal to serve as the output voltage signal of said overvoltage protection circuit, further including:
when said overvoltage protection module operates in overvoltage protection mode, when said switching transistor is fully conductive and said voltage of the output voltage signal is maintained at less than the first threshold, said overvoltage protection module switches to operate in normal mode.

## Patentansprüche

1. Überspannungsschutzschaltung (100), die Folgendes aufweist:
eine Überspannungsschutzeinheit (101), die zum Erzeugen eines Ausgangsspannungssignals (Vout) der Überspannungsschutzschaltung verwendet wird, das auf einem gefilterten Spannungssignal basiert, und wenn die Spannung des Ausgangsspannungssignals größer als oder gleich einem ersten Schwellenwert (Vth) ist,
gibt sie ein angepasstes Spannungssignal aus, das sich von dem gefilterten Spannungssignal unterscheidet und als Ausgangsspannungssignal der Überspannungsschutzschaltung dient, wobei die Spannung des angepassten Spannungssignals unter dem ersten Schwellenwert liegt,
wobei das angepasste Spannungssignal eine Sägezahnwellenform aufweist,
**dadurch gekennzeichnet, dass** die Überspannungsschutzschaltung ferner eine aus Induktoren und Kondensatoren zusammengesetzte n-Filterschaltung (202) enthält, die dazu dient, das Eingangsspannungssignal zu filtern, um das gefilterte Spannungssignal zu erhalten.

2. Überspannungsschutzschaltung nach Anspruch 1, wobei die Überspannungsschutzeinheit einen Schalttransistor (Q) und einen Ausgangskondensator (Cout) enthält, ein erster Anschluss des Schalttransistors mit dem Eingangsanschluss der Überspannungsschutzeinheit verbunden ist, um das gefilterte Spannungssignal zu empfangen, ein zweiter Anschluss des Schalttransistors mit dem Ausgangsanschluss der Überspannungsschutzeinheit verbunden ist, um das gefilterte Spannungssignal oder das angepasste Spannungssignal auszugeben, ein Anschluss des Ausgangskondensators mit dem zweiten Anschluss des Schalttransistors verbunden ist, der andere Anschluss des Ausgangskondensators geerdet ist,
wobei der Schalttransistor leitend bleibt, wenn die Spannung des Ausgangsspannungssignals kleiner als der erste Schwellenwert bleibt, und intermittierend leitend und abgeschaltet wird, wenn die Spannung des Ausgangsspannungssignals größer als oder gleich dem ersten Schwellenwert ist,
wobei, wenn der Schalttransistor leitend ist und intermittierend abgeschaltet wird, der Ausgangskondensator einen Lade- und Entladevorgang wiederholt, so dass das angepasste Spannungssignal eine Sägezahnwellenform aufweist.

3. Überspannungsschutzschaltung nach Anspruch 2, wobei die Überspannungsschutzeinheit ferner ein Überspannungsschutz-Steuermodul (2011) enthält, der Steueranschluss des Schalttransistors mit dem Überspannungsschutz-Steuermodul verbunden ist und das Überspannungsschutz-Steuermodul für Folgendes ausgebildet ist:
wenn die Spannung des Ausgangsspannungssignals unter dem ersten Schwellenwert gehalten wird, arbeitet das Überspannungsschutz-Steuermodul im Normalmodus und gibt ein effektives Pegelsteuersignal an den Anschluss des Schalttransistors aus, um den leitenden Zustand des Schalttransistors aufrechtzuerhalten,
wenn die Spannung des Ausgangsspannungssignals größer oder gleich dem ersten Schwellenwert ist, gibt das Überspannungsschutz-Steuermodul bei Betrieb des Überspannungsschutzmoduls ein intermittierendes effektives Pegelsteuersignal an den Anschluss des Schalttransistors aus, um den Schalttransistor intermittierend leitend und abschaltbar zu machen.

4. Überspannungsschutzschaltung nach Anspruch 3, wobei die Wirkung jedes effektiven Pegelsteuersignals der intermittierenden effektiven Pegelsteuersignale auf den Steueranschluss des Schalttransistors allmählich zunimmt.

5. Überspannungsschutzschaltung nach Anspruch 4, wobei die Überspannungsschutzeinheit ferner eine Spannungserkennungsschaltung (2012) enthält, ein Anschluss der Spannungserkennungsschaltung mit dem Ausgangsanschluss der Überspannungsschutzeinheit verbunden ist und der andere Anschluss der Spannungserkennungsschaltung geerdet ist,
wobei die Spannungserkennungsschaltung ein Spannungserkennungssignal an das Überspannungsschutz-Steuermodul liefert, und wenn der Wert des Spannungserkennungssignals größer oder gleich einem ersten Spannungserkennungsschwellenwert ist, der dem ersten Schwellenwert entspricht, das Überspannungsschutz-Steuermodul in den Überspannungsschutzmodus eintritt und den Schalttransistor steuert, um ihn auszuschalten, bis der Wert des Spannungserkennungssignals auf ein vorbestimmtes Verhältnis des ersten Spannungserkennungsschwellenwerts abfällt, dann den Schalttransistor so steuert, dass er wieder leitend wird, bis der Wert des Spannungserfassungssignals wieder größer oder gleich dem entsprechenden ersten Spannungserkennungsschwellenwert des ersten Schwellenwerts ist, wobei der Schalttransistor auf der Grundlage der allmählich ansteigenden Spannung am Steueranschluss des Schalttransistors so gesteuert wird, dass er leitend wird.

6. Überspannungsschutzschaltung nach Anspruch 5, wobei das Überspannungsschutz-Steuermodul ferner für Folgendes ausgebildet ist:
während des Betriebs im Überspannungsschutzmodus, wenn der Schalttransistor vollständig leitend ist und die Spannung des Ausgangsspannungssignals unter dem ersten Schwellenwert gehalten wird, Umschalten in den Normalmodus.

7. Verfahren zum Überspannungsschutz mit Anwendung der Überspannungsschutzschaltung nach einem der Ansprüche 1 bis 6, das folgendes beinhaltet:
eine n-Filterschaltung (202), die aus Induktoren und Kondensatoren besteht, filtert das Eingangsspannungssignal, um ein gefiltertes Spannungssignal zu erhalten;
eine Überspannungsschutzeinheit (201) erzeugt ein Ausgangsspannungssignal (Vout) der Überspannungsschutzschaltung basierend auf dem gefilterten Spannungssignal, und wenn die Spannung des Ausgangsspannungssignals größer als oder gleich einem ersten Schwellenwert (Vth) ist, gibt sie ein angepasstes Spannungssignal aus, das sich von dem gefilterten Spannungssignal unterscheidet, um als das Ausgangsspannungssignal der Überspannungsschutzschaltung zu dienen, wobei die Spannung des angepassten Spannungssignals kleiner als der erste Schwellenwert ist,
wobei das angepasste Spannungssignal eine Sägezahnwellenform aufweist.

8. Verfahren nach Anspruch 7, wobei die Überspannungsschutzeinheit einen Schalttransistor (Q) und einen Ausgangskondensator (Cout) enthält, ein erster Anschluss des Schalttransistors mit dem Eingangsanschluss der Überspannungsschutzeinheit verbunden ist, um das gefilterte Spannungssignal zu empfangen, ein zweiter Anschluss des Schalttransistors mit dem Ausgangsanschluss der Überspannungsschutzeinheit verbunden ist, um das gefilterte Spannungssignal oder das angepasste Spannungssignal auszugeben, ein Anschluss des Ausgangskondensators mit dem zweiten Anschluss des Schalttransistors verbunden ist, der andere Anschluss des Ausgangskondensators geerdet ist,
wobei die Überspannungsschutzeinheit ein Ausgangsspannungssignal der Überspannungsschutzschaltung basierend auf dem gefilterten Spannungssignal erzeugt, und wenn die Spannung des Ausgangsspannungssignals größer oder gleich dem ersten Schwellenwert ist, gibt sie ein angepasstes Spannungssignal aus, das sich von dem gefilterten Spannungssignal unterscheidet, um als das Ausgangsspannungssignal der Überspannungsschutzschaltung zu dienen, einschließlich:
Steuern des Schalttransistors, um leitend zu bleiben, wenn die Spannung des Ausgangsspannungssignals kleiner als der erste Schwellenwert bleibt; und um intermittierend leitend und ausgeschaltet zu werden, wenn die Spannung des Ausgangsspannungssignals größer als oder gleich dem ersten Schwellenwert ist, und wobei, wenn der Schalttransistor leitend gemacht und intermittierend ausgeschaltet wird, der Ausgangskondensator einen Lade- und Entladevorgang wiederholt, so dass das angepasste Spannungssignal eine Sägezahnwellenform hat.

9. Verfahren nach Anspruch 8, wobei die Überspannungsschutzeinheit ferner ein Überspannungsschutz-Steuermodul (2011) enthält und der Steueranschluss des Schalttransistors mit dem Überspannungsschutz-Steuermodul verbunden ist,
wobei die Überspannungsschutzeinheit ein Ausgangsspannungssignal der Überspannungsschutzschaltung basierend auf dem gefilterten Spannungssignal erzeugt, und wenn die Spannung des Ausgangsspannungssignals größer oder gleich dem ersten Schwellenwert ist, gibt sie ein angepasstes Spannungssignal aus, das sich von dem gefilterten Spannungssignal unterscheidet, um als das Ausgangsspannungssignal der Überspannungsschutzschaltung zu dienen, ferner Folgendes beinhaltend:
wenn die Spannung des Ausgangsspannungssignals unter dem ersten Schwellenwert gehalten wird, das Überspannungsschutzmodul veranlasst, im Normalmodus zu arbeiten, um ein effektives Pegelsteuersignal an den Steueranschluss des Schalttransistors auszugeben, um den leitenden Zustand des Schalttransistors aufrechtzuerhalten,
wenn die Spannung des Ausgangsspannungssignals größer oder gleich dem ersten Schwellenwert ist, arbeitet das Überspannungsschutzmodul im Überspannungsschutzmodus, so dass das Überspannungsschutz-Steuermodul ein intermittierendes effektives Pegelsteuersignal an den Steueranschluss des Schalttransistors ausgibt, um den Schalttransistor intermittierend leitend und ausgeschaltet zu machen.

10. Verfahren nach Anspruch 9, wobei die Wirkung jedes effektiven Pegelsteuersignals der intermittierenden effektiven Pegelsteuersignale auf den Steueranschluss des Schalttransistors allmählich zunimmt.

11. Verfahren nach Anspruch 10, wobei die Überspannungsschutzeinheit eine Spannungserkennungsschaltung (2012) enthält, ein Anschluss der Spannungserkennungsschaltung mit dem Ausgangsanschluss der Überspannungsschutzeinheit verbunden ist und der andere Anschluss der Spannungserkennungsschaltung geerdet ist,
wobei die Überspannungsschutzeinheit ein Ausgangsspannungssignal der Überspannungsschutzschaltung basierend auf dem gefilterten Spannungssignal erzeugt, und wenn die Spannung des Ausgangsspannungssignals größer oder gleich dem ersten Schwellenwert ist, gibt sie ein angepasstes Spannungssignal aus, das sich von dem gefilterten Spannungssignal unterscheidet, um als das Ausgangsspannungssignal der Überspannungsschutzschaltung zu dienen, ferner Folgendes beinhaltend:
Bewirken, dass die Spannungserkennungsschaltung ein Spannungserkennungssignal an das Überspannungsschutz-Steuermodul liefert, und wenn der Wert des Spannungserkennungssignals größer oder gleich einem ersten Spannungserkennungsschwellenwert ist, der dem ersten Schwellenwert entspricht, steuert das Überspannungsschutz-Steuermodul, das in den Überspannungsschutzmodus eingetreten ist, dass der Schalttransistor ausgeschaltet wird, bis der Wert des Spannungserkennungssignals auf ein vorbestimmtes Verhältnis des ersten Spannungserkennungsschwellenwerts abfällt, dann den Schalttransistor so steuert, dass er wieder leitend wird, bis der Wert des Spannungserkennungssignals wieder größer oder gleich dem entsprechenden ersten Spannungserkennungsschwellenwert des ersten Schwellenwerts ist, wobei der Schalttransistor auf der Grundlage der allmählich ansteigenden Spannung am Steueranschluss des Schalttransistors so gesteuert wird, dass er leitend wird.

12. Verfahren nach Anspruch 11, wobei die Überspannungsschutzeinheit ein Ausgangsspannungssignal der Überspannungsschutzschaltung basierend auf dem gefilterten Spannungssignal erzeugt, und wenn die Spannung des Ausgangsspannungssignals größer oder gleich dem ersten Schwellenwert ist, gibt sie ein angepasstes Spannungssignal aus, das sich von dem gefilterten Spannungssignal unterscheidet, um als Ausgangsspannungssignal der Überspannungsschutzschaltung zu dienen, ferner Folgendes beinhaltend:
wenn das Überspannungsschutzmodul im Überspannungsschutzmodus arbeitet, wenn der Schalttransistor vollständig leitend ist und die Spannung des Ausgangsspannungssignals unter dem ersten Schwellenwert gehalten wird, schaltet das Überspannungsschutzmodul auf den Betrieb im Normalmodus um.

## Revendications

1. Circuit de protection contre les surtensions (100), incluant :
une unité de protection contre les surtensions (101), utilisée pour générer un signal de tension de sortie (Vout) dudit circuit de protection contre les surtensions généré sur la base d'un signal de tension filtré, et lorsque la tension dudit signal de tension de sortie est supérieure ou égale à un premier seuil (Vth),
elle délivre un signal de tension ajusté différent dudit signal de tension filtré pour servir de signal de tension de sortie dudit circuit de protection contre les surtensions, la tension dudit signal de tension ajusté est inférieure audit premier seuil,
dans lequel ledit signal de tension ajusté a une forme d'onde en dents de scie,
**caractérisé en ce que** ledit circuit de protection contre les surtensions incluant en outre un circuit de filtre en π (202) composé d'inductances et de condensateurs, utilisé pour filtrer le signal de tension d'entrée afin d'obtenir ledit signal de tension filtré.

2. Circuit de protection contre les surtensions selon la revendication 1, dans lequel ladite unité de protection contre les surtensions inclut un transistor de commutation (Q) et un condensateur de sortie (Cout), une première borne dudit transistor de commutation est connectée à la borne d'entrée de ladite unité de protection contre les surtensions de manière à recevoir ledit signal de tension filtré, une seconde borne dudit transistor de commutation est connectée à la borne de sortie de ladite unité de protection contre les surtensions de manière à délivrer en sortie le signal de tension filtré ou le signal de tension ajusté, une borne dudit condensateur de sortie est connectée à la seconde borne dudit transistor de commutation, l'autre borne dudit condensateur de sortie est mise à la terre,
dans lequel ledit transistor de commutation reste conducteur lorsque la tension du signal de tension de sortie reste inférieure au premier seuil ; et devient conducteur et déconnecté par intermittence lorsque la tension du signal de tension de sortie est supérieure ou égale au premier seuil,
dans lequel, lorsque ledit transistor de commutation est conducteur et déconnecté par intermittence, ledit condensateur de sortie répète un processus de charge et de décharge, de sorte que ledit signal de tension ajusté présente une forme d'onde en dents de scie.

3. Circuit de protection contre les surtensions selon la revendication 2, dans lequel ladite unité de protection contre les surtensions inclut en outre un module de commande de protection contre les surtensions (2011), la borne de commande dudit transistor de commutation est connectée audit module de commande de protection contre les surtensions, et ledit module de commande de protection contre les surtensions est configuré pour :
lorsque la tension dudit signal de tension de sortie est maintenue inférieure au premier seuil, le module de commande de protection contre les surtensions fonctionne en mode normal, délivrant un signal de commande de niveau efficace à la borne de commande dudit transistor de commutation de manière à maintenir l'état conducteur dudit transistor de commutation,
lorsque la tension dudit signal de tension de sortie est supérieure ou égale au premier seuil, dans le cadre du fonctionnement du module de protection contre les surtensions, le module de commande de protection contre les surtensions délivre un signal de commande de niveau efficace intermittent à la borne de commande dudit transistor de commutation de manière à rendre par intermittence le transistor de commutation conducteur et déconnecté.

4. Circuit de protection contre les surtensions selon la revendication 3, dans lequel l'action de chaque signal de commande de niveau efficace des signaux de commande de niveau efficace intermittents sur la borne de commande dudit transistor de commutation augmente progressivement.

5. Circuit de protection contre les surtensions selon la revendication 4, dans lequel ladite unité de protection contre les surtensions inclut en outre un circuit de détection de tension (2012), une borne dudit circuit de détection de tension est connectée à la borne de sortie de ladite unité de protection contre les surtensions, et l'autre borne dudit circuit de détection de tension est mise à la terre,
dans lequel le circuit de détection de tension fournit un signal de détection de tension audit module de commande de protection contre les surtensions, et lorsque la valeur du signal de détection de tension est supérieure ou égale à un premier seuil de détection de tension correspondant audit premier seuil, ledit module de commande de protection contre les surtensions entre dans le mode de protection contre les surtensions, et commande le transistor de commutation pour qu'il soit désactivé jusqu'à ce que la valeur du signal de détection de tension chute à un rapport prédéterminé dudit premier seuil de détection de tension, puis commande le transistor de commutation pour qu'il redevienne conducteur jusqu'à ce que la valeur du signal de détection de tension soit de nouveau supérieure ou égale au premier seuil de détection de tension correspondant dudit premier seuil, dans lequel le transistor de commutation est commandé pour être conducteur sur la base de la tension augmentant progressivement au niveau de la borne de commande du transistor de commutation.

6. Circuit de protection contre les surtensions selon la revendication 5, dans lequel ledit module de commande de protection contre les surtensions est en outre configuré pour :
pendant qu'il fonctionne dans le mode de protection contre les surtensions, lorsque ledit transistor de commutation est entièrement conducteur et que la tension du signal de tension de sortie est maintenue inférieure au premier seuil, basculer sur le mode normal.

7. Procédé de protection contre les surtensions, appliquant le circuit de protection contre les surtensions selon l'une quelconque des revendications 1 à 6, incluant :
un circuit de filtre en π (202) composé d'inductances et de condensateurs filtre le signal de tension d'entrée pour obtenir un signal de tension filtré ;
une unité de protection contre les surtensions (201) génère un signal de tension de sortie (Vout) dudit circuit de protection contre les surtensions sur la base dudit signal de tension filtré, et lorsque la tension dudit signal de tension de sortie est supérieure ou égale à un premier seuil (Vth), elle délivre un signal de tension ajusté différent dudit signal de tension filtré pour servir de signal de tension de sortie dudit circuit de protection contre les surtensions, la tension dudit signal de tension ajusté est inférieure audit premier seuil,
dans lequel ledit signal de tension ajusté a une forme d'onde en dents de scie.

8. Procédé selon la revendication 7, dans lequel ladite unité de protection contre les surtensions inclut un transistor de commutation (Q) et un condensateur de sortie (Cout), une première borne dudit transistor de commutation est connectée à la borne d'entrée de ladite unité de protection contre les surtensions de manière à recevoir ledit signal de tension filtré, une seconde borne dudit transistor de commutation est connectée à la borne de sortie de ladite unité de protection contre les surtensions de manière à délivrer en sortie le signal de tension filtré ou le signal de tension ajusté, une borne dudit condensateur de sortie est connectée à la seconde borne dudit transistor de commutation, l'autre borne dudit condensateur de sortie est mise à la terre,
dans lequel l'unité de protection contre les surtensions génère un signal de tension de sortie dudit circuit de protection contre les surtensions sur la base dudit signal de tension filtré, et lorsque la tension dudit signal de tension de sortie est supérieure ou égale au premier seuil, elle délivre un signal de tension ajusté différent dudit signal de tension filtré pour servir de signal de tension de sortie dudit circuit de protection contre les surtensions, incluant :
la commande dudit transistor de commutation pour qu'il reste conducteur lorsque la tension du signal de tension de sortie reste inférieure au premier seuil ; et pour qu'il devienne conducteur et déconnecté par intermittence lorsque la tension du signal de tension de sortie est supérieure ou égale au premier seuil, et dans lequel, lorsque ledit transistor de commutation est rendu conducteur et déconnecté par intermittence, ledit condensateur de sortie répète un processus de charge et de décharge, de sorte ledit signal de tension ajusté a une forme d'onde en dents de scie.

9. Procédé selon la revendication 8, dans lequel ladite unité de protection contre les surtensions inclut en outre un module de commande de protection contre les surtensions (2011), la borne de commande dudit transistor de commutation est connectée audit module de commande de protection contre les surtensions,
dans lequel l'unité de protection contre les surtensions génère un signal de tension de sortie dudit circuit de protection contre les surtensions sur la base dudit signal de tension filtré, et lorsque la tension dudit signal de tension de sortie est supérieure ou égale au premier seuil, elle délivre un signal de tension ajusté différent dudit signal de tension filtré pour servir de signal de tension de sortie dudit circuit de protection contre les surtensions, incluant en outre :
lorsque la tension dudit signal de tension de sortie est maintenue inférieure au premier seuil, le fait d'amener ledit module de protection contre les surtensions à fonctionner en mode normal, de manière à délivrer un signal de commande de niveau efficace à la borne de commande dudit transistor de commutation de manière à maintenir l'état conducteur dudit transistor de commutation,
lorsque la tension dudit signal de tension de sortie est supérieure ou égale au premier seuil, ledit module de protection contre les surtensions fonctionne en mode de protection contre les surtensions, de sorte que le module de commande de protection contre les surtensions délivre un signal de commande de niveau efficace intermittent à la borne de commande dudit transistor de commutation de manière à rendre par intermittence le transistor de commutation conducteur et déconnecté.

10. Procédé selon la revendication 9, dans lequel l'action de chaque signal de commande de niveau efficace desdits signaux de commande de niveau efficace intermittents sur la borne de commande dudit transistor de commutation augmente progressivement.

11. Procédé selon la revendication 10, dans lequel ladite unité de protection contre les surtensions inclut un circuit de détection de tension (2012), une borne dudit circuit de détection de tension est connectée à ladite borne de sortie de ladite unité de protection contre les surtensions, l'autre borne dudit circuit de détection de tension est mise à la terre,
dans lequel l'unité de protection contre les surtensions génère un signal de tension de sortie dudit circuit de protection contre les surtensions sur la base dudit signal de tension filtré, et lorsque la tension dudit signal de tension de sortie est supérieure ou égale au premier seuil, elle délivre un signal de tension ajusté différent dudit signal de tension filtré pour servir de signal de tension de sortie dudit circuit de protection contre les surtensions, incluant en outre :
le fait d'amener ledit circuit de détection de tension à fournir un signal de détection de tension audit module de commande de protection contre les surtensions, et lorsque la valeur du signal de détection de tension est supérieure ou égale à un premier seuil de détection de tension correspondant audit premier seuil, le module de commande de protection contre les surtensions qui est entré dans le mode de protection contre les surtensions commande le transistor de commutation pour qu'il soit désactivé jusqu'à ce que la valeur du signal de détection de tension chute à un rapport prédéterminé du premier seuil de détection de tension, puis la commande du transistor de commutation pour qu'il redevienne conducteur jusqu'à ce que la valeur du signal de détection de tension soit à nouveau supérieure ou égale au premier seuil de détection de tension correspondant dudit premier seuil, dans lequel, le transistor de commutation est commandé pour être conducteur sur la base de la tension augmentant progressivement au niveau de la borne de commande du transistor de commutation.

12. Procédé selon la revendication 11, dans lequel l'unité de protection contre les surtensions génère un signal de tension de sortie dudit circuit de protection contre les surtensions sur la base dudit signal de tension filtré, et lorsque la tension dudit signal de tension de sortie est supérieure ou égale au premier seuil, elle délivre un signal de tension ajusté différent dudit signal de tension filtré pour servir de signal de tension de sortie dudit circuit de protection contre les surtensions, incluant en outre :
lorsque ledit module de protection contre les surtensions fonctionne dans le mode de protection contre les surtensions, lorsque ledit transistor de commutation est entièrement conducteur et que ladite tension du signal de tension de sortie est maintenue inférieure au premier seuil, ledit module de protection contre les surtensions bascule pour fonctionner en mode normal.
